# EUROPÄISCHE PATENTSCHRIFT

(11) **EP 1 538 288 B1**
(45) Veröffentlichungstag und Bekanntmachung des Hinweises auf die Patenterteilung: **17.05.2006**
(21) Anmeldenummer: 04027145.4
(22) Anmeldetag: 16.11.2004
(51) Int. Cl.: E05B 65/12, B60R 7/06

(54) **Staufach**
Stowage compartment
Espace de rangement

(30) Priorität: 04.12.2003 DE 10356532
(43) Veröffentlichungstag der Anmeldung: 08.06.2005
(73) Patentinhaber: DaimlerChrysler AG, 70567 Stuttgart (DE)
(72) Erfinder: Gerber, Ulrich, 72218 Wildberg (DE); Weckerle, Thomas, 70825 Korntal-Münchingen (DE)

(56) Entgegenhaltungen:
- WO-A-95/27115
- WO-A-20/04007878
- DE-A- 2 319 315
- DE-A- 4 400 628

## Beschreibung

Die Erfindung betrifft ein Staufach, vorzugsweise ein Handschuhfach, mit den Merkmalen des Oberbegriffs des Anspruchs 1.

Solche Staufächer mit einer Verriegelungseinrichtung sind allgemein bekannt.

So zeigt die DE 44 00 628 C2 ein solches Staufach, das als Handschuhkasten mit einem Deckel und einer Verschlussmechanik ausgebildet ist. Der Handschuhkasten ist in eine Armaturentafel eines Kraftfahrzeugs eingelassen. Er weist einen Deckel auf, der schwenkbar gelagert ist und über eine Verriegelungseinrichtung mit zwei Verrastungsschiebern verschlossen gehalten wird. Die dort gezeigt Verriegelungsvorrichtung ist aus mehreren zusammengesetzten Teilen aufgebaut. Diese ist mit dem Deckel an mehreren Stellen über Dreh- und Schiebelager verbunden. Dieser mehrteilige Aufbau ist relativ störanfällig und neigt aufgrund der beweglichen Lagerungspunkte zur Geräuschentwicklung.

Der Erfindung liegt die Aufgabe zugrunde ein Staufach mit einer geräuscharmen, einfach montierbaren und kostengünstigen Verriegelungsvorrichtung zu schaffen, das konstruktiv einfach aufgebaut ist.

Erfindungsgemäß wird diese Aufgabe durch ein Staufach mit den Merkmalen des Anspruchs 1 gelöst.

Ein Staufach mit einer Verriegelungsvorrichtung weist einen Hebelmechanismus mit zwei miteinander verbundenen Schenkeln auf. Die beiden Schenkel sind über zwei Befestigungselemente unbeweglich mit einem Deckel des Staufachs verbunden. Zudem ist zwischen jedem Schenkel und dem zugehörigen Befestigungselement ein Filmscharnier angeordnet, das eine schwenkbare Lagerung des Hebelmechanismus um einen außerhalb der Schenkel liegenden Drehpunkt ermöglicht. Von Vorteil ist hierbei, dass durch die unbewegliche bzw. starre Verbindung zwischen dem Deckel und den Befestigungselementen eine sichere und klapperfreie Verbindung gewährleistet wird und die Verriegelungsvorrichtung einfach zu montieren ist. Um eine Betätigung der Verriegelungsvorrichtung zu ermöglichen, ist eine bewegliche Lagerung unumgänglich. Dies wird durch das erste Paar Filmscharniere, das zwischen den Schenkeln und den Befestigungselementen angeordnet ist, ermöglicht.
Durch die Ermöglichung der schwenkbaren Lagerung durch das Filmscharnier wird eine Geräuschentwicklung bei der Benutzung der Verriegelungsvorrichtung vermieden, da die Filmscharniere eine kraftschlüssige und spielfreie Lagerung bzw. Verbindung ermöglichen. Weiterhin wird durch die Verwendung von dem in der Verriegelungsvorrichtung integrierten Filmscharnier, zur Ermöglichung der schwenkbaren Lagerung, eine Verringerung der Anzahl der Bauteile und somit auch eine Kostenreduzierung ermöglicht. Die Filmscharniere gleichen zusätzlich eine Toleranz, insbesondere Fertigungs- und/oder Lagetoleranz, zwischen den einzelnen Bauteilen aus.

Weiterhin weist die Verriegelungsvorrichtung zwei in dem Deckel angeordnete Verrastungsschieber auf, die über den Hebelmechanismus, der die Verrastungsschieber entlang ihrer Längsachse in entgegengesetzte Richtungen bewegt, mit einer Betätigungseinrichtung verbunden sind.

In einer Ausführung ist vorgesehen, dass der Hebelmechanismus ein zweites Paar Filmscharniere aufweist, wobei jeder Schenkel über ein solches Filmscharnier mit der Betätigungseinrichtung verbunden ist. Hierdurch wird die Kraft in der Betätigungseinrichtung in die Schenkel eingeleitet und diese werden dann durch die Kraft geräuschlos geschwenkt, vorzugsweise um jeweils einen Drehpunkt, der durch jeweils ein Filmscharnier des ersten Paares Filmscharniere gebildet wird. Durch diese Schwenkbewegung werden die jeweils gleichen Enden der Schenkel entgegengesetzt zueinander bewegt.

Es ist auch vorgesehen, dass der Hebelmechanismus ein drittes Paar Filmscharniere aufweist, wobei jeder Schenkel über ein solches Filmscharnier mit jeweils einem Verrastungsschieber verbunden ist. Hierdurch wird die Kraft in den Schenkeln in die Verrastungsschieber eingeleitet und diese werden dann durch die Kraft geräuschlos entlang ihrer Längsachse entgegengesetzt zueinander bewegt.

In einer weiteren Ausführung ist die Verriegelungsvorrichtung, umfassend die Verrastungsschieber, den Hebelmechanismus, die Betätigungseinrichtung, die Filmscharniere und die Befestigungselemente, als ein einstückiges Bauteil ausgebildet. Das hat den Vorteil, dass die Verriegelungsvorrichtung kostengünstig herstellbar und einfach zu montieren ist. Die Montage beschränkt sich auf einfaches Verbinden der Befestigungselemente mit dem Handschuhfachdeckel. Weiterhin werden hierdurch geringe Toleranzen erreicht und eine Geräuschentwicklung bei der Betätigung vermieden.

Eine weitere Möglichkeit der Gestaltung ist die Verriegelungsvorrichtung als ein in einem Herstellungsschritt, vorzugsweise mit einem Spritzgusswerkzeug, herstellbares Spritzgussteil auszuführen. Dies hat den Vorteil, dass so möglichst geringe Herstellungskosten erreicht werden. Vorzugsweise ist die Verriegelungsvorrichtung als ein Kunststoffspritzgussteil aus beispielsweise einem harten Polyethylen oder Polyurethan, insbesondere Durethan, ausgebildet.

Von Vorteil ist es auch, wenn die Verriegelungsvorrichtung eine Feder, vorzugsweise eine Schraubenfeder, aufweist, die die beiden Schenkel des Hebelmechanismus miteinander verbindet. Die Verriegelungsvorrichtung wird durch eine durch die Feder eingeleitete Federkraft selbständig in eine gewünschte Stellung bewegt. Dies ist beispielsweise eine Stellung, in der der Verrastungsschieber in einer Position ist, in der er ein Öffnen des Deckels verhindert.

Gemäß einer bevorzugten Weiterbildung ist zumindest eines der Filmscharniere als Überlastungssicherung gegen hohe mechanische Kräfte ausgebildet. Krafteinwirkung aufgrund von Fehlbedienung auf beispielsweise die Verrastungsschieber führt zu einer Verformung in den Filmscharnieren, ohne dass ein Materialbruch erfolgt. Dies hat den Vorteil, dass eine Beschädigung durch beispielsweise ein Verklemmen oder eine Fehlbedienung verhindert werden.

In einer vorteilhaften Ausführung sind die Filmscharniere mit einem solchen Abstand zueinander an den Schenkeln angeordnet, dass über den Hebelmechanismus durch diesen Abstand ein gewünschtes Übersetzungsverhältnis zwischen der Betätigungseinrichtung und den Verrastungsschiebern einstellbar ist. Vorteilhaft ist hierbei, dass so ein gewünschtes Verhältnis von Verstellweg der Betätigungseinrichtung zu Verstellweg der Verrastungsschieber eingestellt werden kann. Beispielsweise kann so erreicht werden, dass mit einem geringen Verstellweg der Betätigungseinrichtung die Verrastungsschieber um ein Vielfaches des Verstellweges der Betätigungseinrichtung entlang ihrer Längsachse bewegt werden.

Nachfolgend ist ein Ausführungsbeispiel der Erfindung beschrieben und anhand von Zeichnungen dargestellt.

Dabei zeigen
- Fig. 1: eine Verriegelungsvorrichtung,
- Fig. 2: einen Deckel eines Staufachs, in das die Verriegelungsvorrichtung eingebaut ist,
- Fig. 3: den Deckel des Staufachs in einer weiteren perspektivischen Darstellung und
- Fig. 4: das Staufach mit aufgeklapptem Deckel.

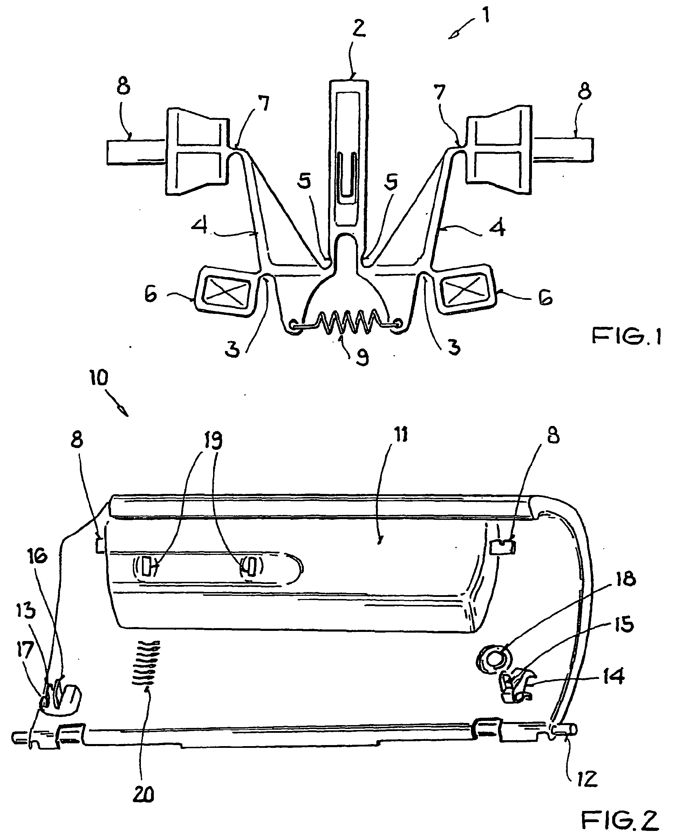

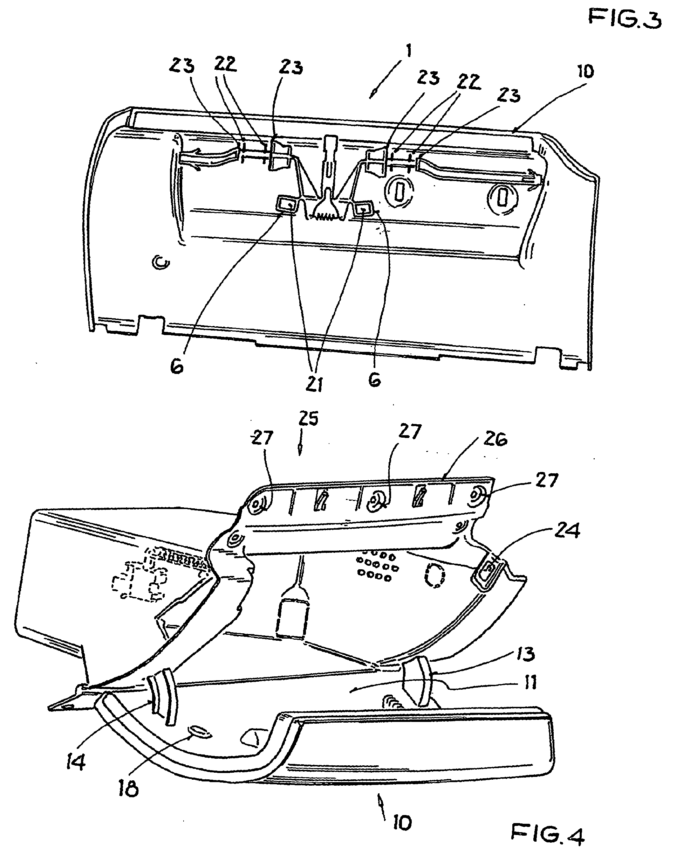

Figur 1 zeigt eine Verriegelungsvorrichtung 1. Zwei Schenkel 4 sind über zwei erste Filmscharniere 3 mit Befestigungselementen 6 verbunden. Diese zwei Filmscharniere 3 ermöglichen eine schwenkbare Lagerung der Schenkel. Eine Betätigungseinrichtung ist über zwei zweite Filmscharniere 5 mit den zwei Schenkeln 4 verbunden. Über ein drittes Paar Filmscharniere 7 sind die Schenkel 4 an ihrem einen Ende mit Verrastungsschiebern 8 verbunden. Die Verrastungsschieber 8 sind links und rechts an der Verriegelungsvorrichtung 1 angeordnet und in Figur 1 allerdings nur teilweise dargestellt. Die Verrastungsschieber 8 greifen mit ihren Enden in Öffnungen 24 im Staufach 25 ein und verriegeln so den Deckel. Die Öffnungen 24 und das Staufach 25 sind in Figur 4 näher dargestellt.

An dem in Figur 1 unten liegenden Ende der Schenkel 4 ist eine Feder 9 angeordnet, die diese beiden Enden der Schenkel 4 miteinander verbindet und mit einer Federkraft beaufschlagt.

Die Schenkel 4 bilden zusammen mit den Befestigungselementen 6 und den Filmscharnieren 3, 5, 7 einen Hebelmechanismus. Der Hebelmechanismus dient einer Umsetzung einer Bewegung der Betätigungseinrichtung 2 in eine Bewegung der Verrastungsschieber 8.

Bei der Bewegung der Betätigungseinrichtung 2 entlang ihrer Längsachse nach unten werden die Schenkel 4 um einen Drehpunkt, der durch die ersten Filmscharniere 3 verläuft geschwenkt. Die Schenkel 4 bilden zusammen mit dem Drehpunkt einen geraden Hebel. Durch die Schwenkbewegung der Schenkel 4 werden die jeweils gleichen Enden der Schenkel 4 entgegengesetzt zueinander bewegt, d.h. beispielsweise die mit den Enden verbundenen Verrastungsschieber 8 werden entlang ihrer Längsachse auf einander zu bewegt und geben so die Verriegelung frei. Sobald die Betätigungseinrichtung 2 losgelassen wird, werden die Schenkel 4 durch die Federkraft in die entgegengesetzte Richtung geschwenkt und die Verriegelung wird wieder geschlossen.

Figur 2 zeigt die Verriegelungsvorrichtung 1 eingebaut in einen Deckel 10 eines Staufachs 25, insbesondere Handschuhfach eines Kraftfahrzeugs, in einer perspektivischen Darstellung. In Figur 2 ist die dem Handschuhfach 25 zugewandte Seite des Deckels 10 dargestellt. Die Verriegelungsvorrichtung 1 wird durch eine Verkleidung 11 des Deckels 10 verdeckt. Lediglich die beiden Enden der Verrastungsschieber 8 ragen links und rechts durch die Verkleidung 11 hindurch. Bei geschlossenem Handschuhfach 25 greifen die Verrastungsschieber 8 mit den dargestellten Enden in eine entsprechende Halterung oder Öffnungen 24 in dem Handschuhfach ein. Die Öffnungen 24 sind in Figur 4 dargestellt.

Der Handschuhfachdeckel 10 ist über ein Schwenklager 12 mit einer Armaturentafel verbunden. Zwei Scharnierarme 13, 14 sind auf der Innenseite des Handschuhfachdeckels angeordnet. Die Scharnierarme 13, 14 weisen je einen Anschlag 15, 16 auf. Die Anschläge 15, 16 begrenzen den Drehwinkel, um denn der Handschuhfachdeckel 10 aufgeklappt werden kann und können einen Gummiüberzug aufweisen, der in der Figur 2 nicht dargestellt ist und als Pufferelement dient, um beim Öffnen einen harten Anschlag zu vermeiden.

Der in der Figur 2 links dargestellte, erste Scharnierarm 13 weist ein Befestigungselement 17 für einen Luftdämpfer auf. Durch den Luftdämpfer wird der Schwenkvorgang gedämpft und es wird der Eindruck einer Höherwertigkeit des gesamten Handschuhfachs erweckt.

Links, oberhalb des zweiten Scharnierarms 14 weist die Oberfläche der Verkleidung 11 des Handschuhfachdeckels 10 eine Auswölbung 18 auf. Diese Auswölbung 18 dient als Anpassung der Oberfläche an einen Stift, der als Betätigungselement für eine Innenbeleuchtung des Handschuhfaches ausgebildet ist. Beim Schließen des Handschuhfachdeckels 10 wird der Stift durch die Auswölbung 18 entlang seiner Längsachse bewegt und schaltet die Innenbeleuchtung des Handschuhfaches 25 aus. Beim Öffnen des Handschuhfachdeckels 10 wird der Stift wieder freigegeben und durch eine Feder, die an dem Stift angeordnet ist, in die entgegengesetzte Richtung bewegt und die Innenbeleuchtung wird wieder eingeschaltet.

Die Verkleidung 11 weist zwei Öffnungen 19 auf, in die beispielsweise ein Stifthalter eingeklipst werden kann.

Weiterhin ist an der Verkleidung 11 ein Münzhalter 20 angeordnet. In den Münzhalter 20 können Münzen verschiedener Größen eingesteckt und so sicher gehaltert werden.

Figur 3 zeigt die Verriegelungsvorrichtung 1 eingebaut in den Deckel 10 des Handschuhfachs 25 in einer weiteren perspektivischen Darstellung. Die Blickrichtung ist in dieser Darstellung von einem Innenraum des Kraftfahrtzeugs zum geschlossenen Handschuhfachdeckel 10 hin. Eine Verkleidung der zum Innenraum gewandten Seite des Handschuhfachdeckels 10 ist nicht dargestellt, um die Sicht auf die Verriegelungsvorrichtung 1 nicht zu verdecken.

Die Verriegelungsvorrichtung 1 ist mit den Befestigungselementen 6 auf Zapfen 21 in dem Handschuhfachdeckel 10 aufgesteckt und mit diesem verrastet. Die Befestigungselemente 6 weisen rechteckige Öffnungen auf, die passgenau auf die ebenfalls rechteckig ausgebildeten Zapfen 21 abgestimmt sind. Hierdurch werden Bewegungen der auf die Zapfen 21 aufgesteckten Befestigungselemente 6 verhindert und somit werden Klappergeräusche wirksam vermieden.

Die Verriegelungsvorrichtung 1 ist als einstückiges Bauteil ausgeführt. Das bedeutet, dass die einzelnen Komponenten, wie die Betätigungseinrichtung 2, die Schenkel 4, die Befestigungselemente 6, die Filmscharniere 3, 5, 7 und die Verrastungsschieber 8 aus einem durchgehenden Bauteil aus dem selben Werkstoff bestehen. D.h. zwischen den einzelnen Komponenten gibt es kein Spiel und somit auch keine potentiellen Geräuschquellen. Ebenso entfällt bei der Montage das Fügen der einzelnen Bestandteilen der Verriegelungsvorrichtung 1.

Der Handschuhfachdeckel 10 weist Führungselemente 22 auf, in denen die Verrastungsschieber 8 geführt werden. Die Verriegelungsvorrichtung 1 hat somit nur zwei Berührungspunkte mit dem Handschuhfachdeckel 10. Durch diese geringe Anzahl von Berührungspunkten gibt es so nur wenige potentielle Geräuschquellen und es wird eine einfache Montage ermöglicht. Teilbereiche der Verrastungsschieber 8 sind als Anschläge 23 ausgebildet, so dass die Bewegung des Verrastungsschiebers 8 nach links und/oder rechts begrenzt ist. Hierdurch wird ein Verklemmen oder versehentliches Beschädigen der Verriegelungsvorrichtung 1 verhindert. Falls ein Anschlag 23 die weitere Bewegung des Verrastungsschiebers 8 in eine Richtung verhindert und dennoch weiterhin versehentlich eine Kraft auf die Betätigungseinrichtung 2 oder die Verrastungsschieber 8 ausgeübt wird, dienen die Filmscharniere 3, 5, 7 als Überlastungssicherung und nehmen die Kräfte durch Verformung und ohne Bruch auf.

Neben den in Figur 3 dargestellten Führungselementen 22 können auch weitere Führungselemente, insbesondere für das Betätigungselement 2, vorhanden sein.

Die Filmscharniere 3, 5, 7 gleichen durch ihre Beweglichkeit Fertigungstoleranzen, wie beispielsweise eine Längentoleranz aus, ohne dass, wie zum Toleranzausgleich ansonsten unabdingbar, ein zusätzliches Schiebelager notwendig ist.

Figur 4 zeigt das Stauchfach 25 mit aufgeklapptem Deckel 10. Im oberen Bereich des Staufaches 25 befindet sich eine Befestigungsvorrichtung 26 mit Öffnungen 27, über die das Staufach 25 mit der Armaturentafel verbunden, insbesondere verschraubt, werden kann.
Auf der dem Fahrzeuginnenraum zugewandten Seite des Staufaches 25 sind seitliche Öffnungen 24 vorhanden, in die die Verrastungsschieber 8 bei geschlossenem Deckel 10 eingreifen.

Der Deckel 10 ist zum Fahrzeuginnenraum hin mit einer Verkleidung versehen, die in geschlossenem Zustand des Handschuhfaches 25 die Befestigungsvorrichtung 26 abdeckt.

## Patentansprüche

1. Staufach (25), insbesondere Handschuhfach für ein Kraftfahrzeug, mit einer Verriegelungsvorrichtung (1), die in einem schwenkbar gelagertem Deckel (10) des Staufachs (25) angeordnet ist und eine Betätigungseinrichtung (2), einen Hebelmechanismus und zwei Verrastungsschieber (8) aufweist, wobei die Verriegelungsvorrichtung (1) über zwei Befestigungselemente (6) mit dem Deckel (10) verbunden ist und der Hebelmechanismus zwei miteinander verbundene Schenkel (4) aufweist, die mit der Betätigungseinrichtung (2) und den Verrastungsschiebern (8) so verbunden sind, dass bei Bewegung der Betätigungseinrichtung (2) die Verrastungsschieber (8) entlang ihrer Längsachse in jeweils entgegengesetzte Richtungen bewegt werden, wobei ihre Längsachse in dem Deckel (10) verläuft,
**dadurch gekennzeichnet,**
**dass** die Befestigungselemente (6) unbeweglich mit dem Deckel (10) verbunden sind und der Hebelmechanismus ein erstes Paar Filmscharniere (3) aufweist, wobei jeder Schenkel (4) über ein solches Filmscharnier (3) mit einem der Befestigungselemente (6) so verbunden ist, dass das Filmscharnier (3) zwischen dem Befestigungselement (6) und dem Schenkel (4) angeordnet ist und das Filmscharnier (3) eine Schwenkbewegung des Hebelmechanismus um einen zwischen Schenkel (4) und Betätigungselement (2) liegenden Drehpunkt ermöglicht.

2. Staufach nach Anspruch 1
**dadurch gekennzeichnet,**
**dass** der Hebelmechanismus ein zweites Paar Filmscharniere (5) aufweist, wobei jeder Schenkel (4) über ein solches Filmscharnier (5) mit der Betätigungseinrichtung (2) verbunden ist.

3. Staufach nach Anspruch 1 oder 2
**dadurch gekennzeichnet,**
**dass** der Hebelmechanismus ein drittes Paar Filmscharniere (7) aufweist, wobei jeder Schenkel (4) über ein solches Filmscharnier (7) mit jeweils einem Verrastungsschieber (8) verbunden ist.

4. Staufach nach einem der vorhergehenden Ansprüche
**dadurch gekennzeichnet,**
**dass** die Verriegelungsvorrichtung (1), umfassend die Verrastungsschieber (8), den Hebelmechanismus, die Betätigungseinrichtung (2), die Filmscharniere (3, 5, 7) und die Befestigungselemente (6), als ein einstückiges Bauteil ausgebildet ist.

5. Staufach nach Anspruch 4
**dadurch gekennzeichnet,**
**dass** die Verriegelungsvorrichtung (1) als ein in einem Herstellungsschritt herstellbares Spritzgussteil ausgeführt ist.

6. Staufach nach einem der vorhergehenden Ansprüche
**dadurch gekennzeichnet,**
**dass** die Verriegelungsvorrichtung (1) eine Feder (9), vorzugsweise eine Schraubenfeder, aufweist, die die beiden Schenkel (4) miteinander verbindet.

7. Staufach nach einem der vorhergehenden Ansprüche
**dadurch gekennzeichnet,**
**dass** die Feder (9) die Verrastungsschieber (8) in Schließrichtung beaufschlagt.

8. Staufach nach einem der vorhergehenden Ansprüche
**dadurch gekennzeichnet,**
**dass** zumindest eines der Filmscharniere (3, 5, 7) als Überlastungssicherung gegen hohe mechanische Kräfte ausgebildet ist.

9. Staufach nach einem der vorhergehenden Ansprüche
**dadurch gekennzeichnet,**
**dass** die Filmscharniere (3, 5, 7) mit einem solchen Abstand zueinander an den Schenkeln (4) angeordnet sind, dass über den Hebelmechanismus ein gewünschtes Übersetzungsverhältnis zwischen der Betätigungseinrichtung (2) und den Verrastungsschiebern (8) einstellbar ist.

## Claims

1. Stowage compartment (25), in particular a glove compartment for a motor vehicle, with a lock mechanism (1) disposed in a pivotably mounted cover (10) of the stowage compartment (25), and comprising an operating device (2), a lever mechanism and two catch slides (8), which lock mechanism (1) is connected to the cover (10) by means of two fixing elements (6), and the lever mechanism has two mutually connected legs (4) which are connected to the operating device (2) and the catch slides (8) so that when the operating device (2) is moved, the catch slides (8) are moved along their longitudinal axes in opposite respective directions, their longitudinal axis extending in the cover (10),
**characterised in that**
the fixing elements (6) are connected to the cover (10) so as to be immobile and the lever mechanism has a first pair of integral hinges (3) and each leg (4) is connected to one of the fixing elements (6) by means of such an integral hinge (3) in such a way that the integral hinge (3) is disposed between fixing element (6) and the leg (4) and the integral hinge (3) enables a pivoting movement of the lever mechanism about a pivot point lying between the leg (4) and operating element (2).

2. Stowage compartment as claimed in claim 1,
**characterised in that**
the lever mechanism has a second pair of integral hinges (5) and each leg (4) is connected by means of such an integral hinge (5) to the operating device (2) .

3. Stowage compartment as claimed in claim 1 or 2,
**characterised in that**
the lever mechanism has a third pair of integral hinges (7) and each leg (4) is connected by means of such an integral hinge (7) to a respective catch slide (8).

4. Stowage compartment as claimed in one of the preceding claims,
**characterised in that**
the lock mechanism (1) comprising the catch slides (8), the lever mechanism, the operating device (2), the integral hinges (3, 5, 7) and the fixing elements (6) are designed as an integral component.

5. Stowage compartment as claimed in claim 4,
**characterised in that**
the lock mechanism (1) is provided in the form of an injection-cast part which can be manufactured in one production step.

6. Stowage compartment as claimed in one of the preceding claims,
**characterised in that**
the lock mechanism (1) has a spring (9), preferably a helical spring, which connects the two legs (4) to one another.

7. Stowage compartment as claimed in one of the preceding claims,
**characterised in that**
the spring (9) biases the catch slides (8) in the closing direction.

8. Stowage compartment as claimed in one of the preceding claims,
**characterised in that**
at least one of the integral hinges (3, 5, 7) is provided as an overload protection against strong mechanical forces.

9. Stowage compartment as claimed in one of the preceding claims,
**characterised in that**
the integral hinges (3, 5, 7) are disposed at such a distance from one another on the legs (4) that a desired transmission ratio can be set by means of the lever mechanism between the operating device (2) and the catch slides (8).

## Revendications

1. Compartiment de rangement (25), notamment boîte à gant pour un véhicule, avec un dispositif de verrouillage (1), qui est disposé dans un couvercle (10) pivotant du compartiment de rangement (25) et qui présente un système d'actionnement (2), un mécanisme à leviers et deux verrous d'enclenchement (8), le dispositif de verrouillage (1) étant relié au couvercle (10) par l'intermédiaire de deux éléments de fixation (6) et le mécanisme à leviers comportant deux branches (4) reliées entre elles, qui sont reliées au système d'actionnement (2) et aux verrous d'enclenchement (8) de manière à ce que, au cours du déplacement du système d'actionnement (2), les verrous d'enclenchement (8) se déplacent le long de leur axe longitudinal dans des directions respectivement opposées, leur axe longitudinal s'étendant dans le couvercle (10), **caractérisé en ce que** les éléments de fixation (6) sont reliés au couvercle (10) de manière fixe et le mécanisme à leviers comporte une première paire de charnières film (3), chaque branche (4) étant reliée à l'un des éléments de fixation (6) par l'intermédiaire d'une telle charnière film (3), de manière à ce que la charnière film (3) soit disposée entre l'élément de fixation (6) et la branche(4) et à ce que la charnière film (3) permette un mouvement de pivotement du mécanisme à leviers autour d'un point de rotation situé entre les branches (4) et l'élément d'actionnement (2).

2. Compartiment de rangement selon la revendication 1, **caractérisé en ce que** le mécanisme à leviers présente une deuxième paire de charnières film (5), chaque branche (4) étant reliée au système d'actionnement (2) par l'intermédiaire d'une telle charnière film (5).

3. Compartiment de rangement selon la revendication 1 ou 2, **caractérisé en ce que** le mécanisme à leviers présente une troisième paire de charnières film (7), chaque branche (4) étant reliée à respectivement un verrou d'enclenchement (8) par l'intermédiaire d'une telle charnière film (7).

4. Compartiment de rangement selon l'une quelconque des revendications précédentes, **caractérisé en ce que** le dispositif de verrouillage (1), comprenant les verrous d'enclenchement (8), le mécanisme à leviers, le système d'actionnement (2), les charnières film (3, 5, 7) et les éléments d'actionnement (6), est conçu sous la forme d'un composant monobloc.

5. Compartiment de rangement selon la revendication 4, **caractérisé en ce que** le dispositif de verrouillage (1) est réalisé sous la forme d'une pièce moulée par injection, pouvant être fabriquée en une étape de fabrication.

6. Compartiment de rangement selon l'une quelconque des revendications précédentes, **caractérisé en ce que** le dispositif de verrouillage (1) présente un ressort (9), de préférence un ressort cylindrique, qui relie entre elles les deux branches(4).

7. Compartiment de rangement selon la revendication précédente, **caractérisé en ce que** le ressort (9) contraint les verrous d'enclenchement (8) dans la direction de fermeture.

8. Compartiment de rangement selon l'une quelconque des revendications précédentes, **caractérisé en ce qu'**au moins l'une des charnières film (3, 5, 7) est conçue sous la forme de sécurité de surcharge contre des forces mécaniques élevées.

9. Compartiment de rangement selon l'une quelconque des revendications précédentes, **caractérisé en ce que** les charnières film (3, 5, 7) sont disposées sur les branches (4) à une distance mutuelle telle, qu'on peut régler un rapport de transmission voulu entre le système d'actionnement (2) et les verrous d'enclenchement (8) par l'intermédiaire du mécanisme à leviers.
